## Europäisches Patentamt

## European Patent Office

## Office européen des brevets

(11) Veröffentlichungsnummer: **0 065 644**
**B1**

(12) **EUROPÄISCHE PATENTSCHRIFT**

(45) Veröffentlichungstag der Patentschrift:
**15.10.86**

(51) Int. Cl.⁴: **B 60 N 1/06**

(21) Anmeldenummer: **82103344.6**

(22) Anmeldetag: **21.04.82**

(54) **Kopfstütze.**

(30) Priorität: **19.05.81 DE 3119781**

(43) Veröffentlichungstag der Anmeldung:
**01.12.82 Patentblatt 82/48**

(45) Bekanntmachung des Hinweises auf die Patenterteilung:
**15.10.86 Patentblatt 86/42**

(84) Benannte Vertragsstaaten:
**FR GB IT**

(56) Entgegenhaltungen:
**DE-A-1 944 411**
**DE-A-2 332 610**
**DE-A-2 525 040**
**DE-A-2 902 246**
**FR-A-2 357 214**

(73) Patentinhaber: **KEIPER RECARO GMBH & CO.,**
**Stuttgarter Strasse 73, D-7312 Kirchheim/Teck**
**(DE)**

(72) Erfinder: **Resag, Jörg, Dahlienweg 1, D-7024**
**Filderstadt 4 (DE)**
Erfinder: **Walz, Jürgen, Gartenstrasse 22/1, D-7015**
**Korntal- Münchingen (DE)**
Erfinder: **Göldner, Walther, Zeppelinstrasse 1,**
**D-7330 Ebersbach/Fils (DE)**

(74) Vertreter: **Patentanwälte Phys. Bartels Dipl.- Ing.**
**Fink Dr.- Ing. Held, Lange Strasse 51, D-7000**
**Stuttgart 1 (DE)**

**Beschreibung**

Die Erfindung betrifft eine Kopfstütze für Fahrzeugsitze, insbesondere Kraftfahrzeugsitze, mit wenigstens einem stabförmigen Halter, auf dem längsverschiebbar ein aus Kunststoff bestehender Verbindungskörper angeordnet ist, und mit einem aus Kunststoff bestehenden, hohlen Polsterkörper, welcher für jeden vorhandenen Verbindungskörper ein Wangenpaar aufweist, zwischen dessen Wangen der Verbindungskörper reibschlüssig auf einem den Verbindungskörper und die Wangen durchdringenden Lagerbolzen schwenkbar gelagert ist.

Bei den bekannten Kopfstützen dieser Art, welche weitgehend Kopfstützen mit einem aus Blech bestehenden Polstertrager, in den Lagerwangen eingeschweißt werden müssen, verdrängt haben, sind die Lagerwangen an den Polsterträger angeformt (DE-A-2 902 246). Ein derartiger Polsterträger ermöglicht eine kostengünstigere Fertigung einer technisch hochwertigen Kopfstütze. Gewisse Schwierigkeiten bereitet jedoch die Einhaltung eines bestimmten Reibungsmomentes zwischen dem Verbindungskörper und den Wangen, und zwar sowohl hinsichtlich der Größe des Reibungsmomentes als auch seiner Unabhängigkeit von der Schwenklage der Kopfstütze.

Der Erfindung liegt die Aufgabe zugrunde, eine Kopfstütze der eingangs genannten Art zu schaffen, die nicht nur die technischen Anforderungen erfüllt und kostengünstig gefertigt werden kann, sondern die außerdem mit geringem Aufwand die Einhaltung eines bestimmten Reibungsmomentes zwischen dem Verbindungskörper und den Lagerwangen gestattet, und zwar auch über einen langen Zeitraum hinweg.

Diese Aufgabe löst eine Kopfstütze mit den Merkmalen des Anspruches 1.

Da trotz einer Ausbildung des Polsterträgers als Kunststoffkörper die Lagerwangen Metallplatten sind, beruht das Feststellelement des Schwenklagers auf einer Reibung zwischen Metall und Kunststoff, was in Verbindung mit dem Spiel der Metallplatten in ihren Aufnahmen, das eine feinfühlige Einstellung der Anpreßkraft ermöglicht, zu einem ausreichend kleinen Streubereich des Reibungsmomentes führt. Dieses Reibungsmoment liegt auch in unterschiedlichen Schwenkstellungen der Kopfstütze innerhalb des Streubereiches. Von Vorteil ist ferner, daß der Koeffizient der Reibung zwischen dem Verbindungskörper und den Wangen wesentlich größer ist als bei den bekannten Kopfstützen, so daß eine geringere Andrückkraft genügt, um das vorgeschriebene Reibungsmoment zu erzielen. Durch diese geringere Andrückkraft wird ein Fließen des Kunststoffes verhindert oder zumindest soweit reduziert, daß es nicht mehr störend in Erscheinung treten kann. Die Wangen können einfache Stanzteile sein, so daß durch sie zumindest dann keine nennenswerte Erhöhung der Fertigungskosten entstehen, wenn die Montage einfach ist, was sich mit den schlitzförmigen Aufnahmen erreichen läßt. Das axiale Spiel, das die Metallplatten in den Aufnahmen haben, ist auch für den Fall vorteilhaft, daß die Flächen, an welche die Metallplatten zur Erzielung eines Reibungsmomentes angedrückt werden, nicht in von der Schwenkachse lotrecht durchdrungenen Ebenen liegen. Der Streubereich des Reibungsmomentes ist hierbei selbst dann gering, wenn die seitlichen Anlageflächen des Reibkörpers oder der Reibkörper nicht eben sind und nicht in einer zur Schwenkachse radial liegenden Ebene liegen, da sich die Lage der Wangen dank deren Einstellbarkeit an die Lage der Seitenflächen des Verbindungskörpers wie bei einer schwimmenden Lagerung anpaßt.

Die erforderliche Einstellbarkeit der Wangen läßt sich durch eine etwas größere Breite der schlitzförmigen Aufnahmen gegenüber der Dicke der die Wangen bildenden Metallplatten erreichen.

Damit die Aufnahmen ohne Schwierigkeiten in den Polsterträger eingeformt werden können und dennoch die die Wangen bildenden Metallplatten allseitig festgehalten werden, weisen bei einer bevorzugten Ausführungsform die Aufnahmen Abschnitte auf, die in das Innere des Polsterträgers hinein offen sind, sowie Abschnitte, die nach außen hin offen sind.

Vorzugsweise bilden die Aufnahmen je einen sich von der Unterseite des Polsterträgers gegen dessen Oberseite hin erstreckenden Kanal, in den/die Wangen bildenden Metallplatten von der Unterseite her einschiebbar sind. Um dennoch in einfacher Weise die eingeschobenen Metallplatten gegen eine Verschiebung entgegen der Einschieberichtung sichern zu können, ist wenigstens eine entgegen der Einschieberichtung wirksame, formschlüssige Sperre mit mindestens einem hintergreifenden Haken vorgesehen. Das Einführen der Metallplatten in die Aufnahmen beschränkt sich hierdurch auf eine einfache Translationsbewegung, so daß die Montage auch ohne weiteres mittels eines einfachen Automaten erfolgen kann.

Der hintergreifende Haken kann an der Metallplatte vorgesehen sein. Zweckmäßigerweise hintergreift er bei eingeschobener Metallplatte einen sich quer über den Kanal hinweg erstreckenden und quer zur Kanallängsrichtung elastisch ausbiegbaren Steg. Insbesondere dann, wenn der Haken selbst während des Einführens der Metallplatte den Steg ausbiegt, ergibt sich am Ende des Einführvorgangs eine selbsttätige Verriegelung, wenn der Steg nach Beendigung der Ausbiegung durch den Haken in seine Ausgangsstellung zurückkehrt, in der ihn der Haken hintergreift.

Der hintergreifende Haken kann auch an einer Zunge des Polsterträgers vorgesehen sein, die sich in Kanallängsrichtung erstreckt, quer zur Längsrichtung des Kanals elastisch auslenkbar ist und in ihrer unausgelenkten Lage den an ihr angeordneten Haken in den Kanal ragen läßt. Hier wird der Haken durch die Metallplatte bei deren Einführen in den Kanal ausgelenkt, bis die Metallplatte vollständig eingeführt ist und den Haken wieder für das Hintergreifen freigibt. Eine derartige Sperre, die ebenfalls die Metallplatte formschlüssig gegen eine Verschiebung entgegen der Einführrichtung in den Kanal sichert, kann statt der erstgenannten Sperre vorgesehen sein. Vorzugsweise werden jedoch zwei Sperren vorgesehen, von denen zweckmäßigerweise die eine in der einen und die andere in der anderen vorstehend erläuterten Art ausgebildet ist.

Im folgenden ist die Erfindung anhand eines in der Zeichnung dargestellten Ausführungsbeispiels im einzelnen erläutert. Es zeigen:

Fig. 1 eine aufgebrochen dargestellte Ansicht des Ausführungsbeispiels von hinten,

Fig. 2 eine Seitenansicht einer der die Wangen bildenden Metallplatten,

Fig. 3 einen Schnitt nach der Linie III - III der Fig. 1

Fig. 4 einen Schnitt nach der Linie IV - IV der Fig.1,

Fig. 5 einen Schnitt nach der Linie V - V der Fig. 1,

Fig. 6 eine vergrößerte Darstellung der Einzelheit X in Fig. 1,

Fig. 7 einen Schnitt nach der Linie VII - VII der Fig. 1,

Fig. 8 einen unvollständig dargestellten Schnitt nach der Linie VIII - VIII der Fig. 1,

Fig. 9 einen Schnitt nach der Linie IX - IX der Fig. 1.

Eine höhenverstellbare Kopfstütze für einen Kraftfahrzeugsitz weist zwei stabförmige Halter 1 mit kreisförmigem Querschnitt auf, deren unteres Ende in der nicht dargestellten Rückenlehne des Fahrzeugsitzes festgelegt wird. Das obere Ende der beiden parallel zueinander verlaufenden Halter 1 ist fest mit einem Querstab 2 verbunden. Auf beiden Haltern 1 ist längsverschiebbar je ein aus Kunststoff bestehender Verbindungskörper 3 angeordnet. Diese beiden gleich ausgebildeten Verbindungskörper haben die Form einer Hülse, an welche im Bereich ihres oberen Endes eine Nabe angeformt ist, deren Bohrung im rechten Winkel zu der den Halter aufnehmenden Bohrung der Hülse verläuft. Im Bereich des unteren Endes der Hülse ist diese mit einem bis auf die Bohrung durchgehenden Querschlitz versehen, in den der eine Schenkel einer Schenkelfeder 4 eingreift, welche auf den unteren Endabschnitt der Hülse aufgesteckt ist. Der mit Vorspannung im Querschnitt liegende und gegen den Halter 1 drückende Schenkel bildet zusammen mit Rasten, welche in der dem Schenkel zugekehrten Seite des Halters 1 vorgesehen sind, eine kraftschlüssige Feststellvorrichtung, mittels deren der Verbindungskörper 3 in wählbaren Positionen und damit die Kopfstütze in wählbarer Höhe feststellbar ist.

Die beiden Verbindungskörper 3 dienen der höhenverstellbaren und außerdem schwenkbaren Verbindung eines als Ganzes mit 5 bezeichneten Polsterträgers mit den beiden Haltern 1. Der Polsterträger 5, an dessen Außenseite ein Polsterkörper 6 anliegt, der den Polsterträger allseitig abdeckt, ist ein zweiteiliger, aus Kunststoff hergestellter Hohlkörper, dessen beide schalenartig ausgebildeten Teile mit ihrer Bodenpartie die Vorderwand 7 bzw. die Rückwand 8 des Polsterträgers bilden. An die Innenseite der Vorderwand 7 und der Rückwand 8 angeformte Rippen 9 dienen der Versteifung dieser Wände sowie der hochgezogenen, ineinandergreifenden Ränder, welche die seitlichen, die obere sowie die untere Schmalseite des Polsterträgers bilden.

Die an die beiden Verbindungskörper 3 angeformten Naben greifen zwischen je zwei als Wangen dienende, ebene und gleich ausgebildete Metallplatten 10 ein, welche je eine mit der Nabenbohrung fluchtende Bohrung 11 haben. Je eine als Schwenkachse dienende Schraube 12 durchdringt die Nabenbohrung und die an den beiden Stirnflächen der Nabe anliegenden Metallplatten 10. Die beiden Stirnflächen jeder Nabe sind vorzugsweise durch eine konische Erweiterung der Nabenbohrung auf eine Stirnfläche verringerter Breite reduziert. Eine auf jeder Schraube 12 angeordnete Mutter 13 wird bei der Montage mit einem solchen Drehmoment angezogen, daß das Reibungsmoment zwischen den Stirnflächen der Nabe des Verbindungskörpers 3 und den die beiden Wangen bildenden Metallplatten 10 die gewünschte Größe hat. Unter den Kopf der Schraube 12 sind zwei Tellerfedern 26 untergelegt.

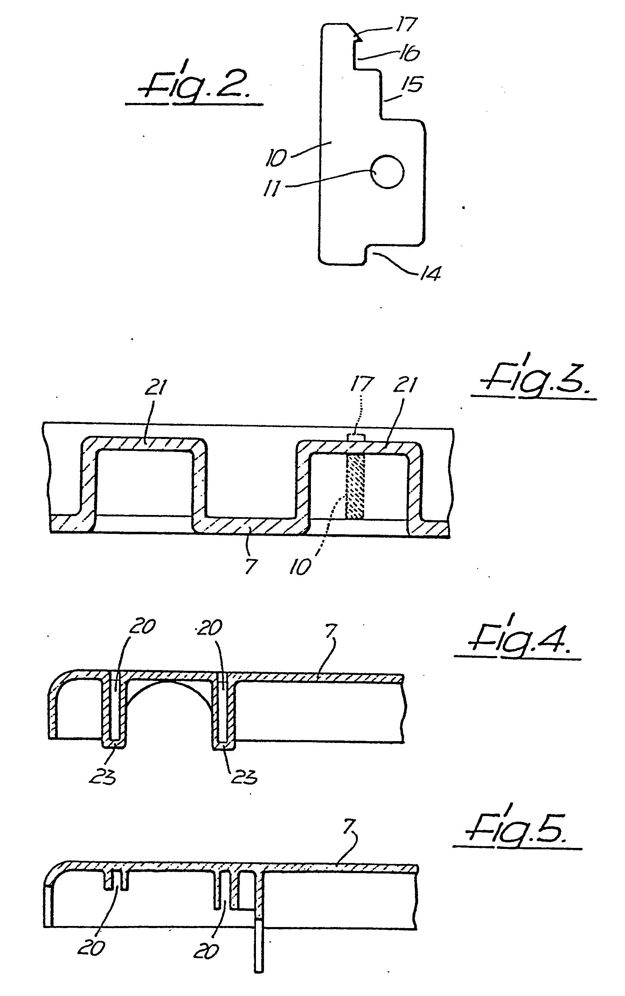

Um die Metallplatten 10 in besonders einfacher Weise mit dem die Vorderwand 7 bildenden Teil des Polsterträgers 5 verbinden zu können, haben sie die in Fig. 2 dargestellte Form. An den die Bohrung 11 aufweisenden Mittelabschnitt schließt sich gegen das im eingebauten Zustand nach unten weisende Ende hin unter Bildung einer Stufe 14 ein Endabschnitt verringerter Höhe an. Auch auf der im eingebauten Zustand nach oben weisenden Seite des Mittelabschnitts schließt sich an diesen eine Stufe 15 an, deren Höhe etwa gleich der Höhe der Stufe 14 ist. Danach folgt, wie Fig. 2 zeigt, auf die Stufe 15 eine zweite Stufe 16, über die am oberen Ende ein einstückig mit der Metallplatte ausgebildeter, sägezahnförmiger Haken 17 übersteht. Die lotrecht auf der zweiten Stufe 16 stehende Flanke des Hakens 17 befindet sich auf der der Stufe 15 zugekehrten Seite, während die abgeschrägte Flanke im eingebauten Zustand nach oben weist.

Für jede der vier Metallplatten 10, die im eingebauten Zustand lotrecht auf der Vorderwand 7 stehen, weist der die Vorderwand 7 des Polsterträgers 5 bildende Teil je einen schlitzförmigen Kanal 20 auf. Die vier gleich ausgebildeten und parallel zueinander verlaufenden Kanäle erstrecken sich von der Unterseite des Polsterträgers aus gegen dessen Oberseite hin und enden im Ausführungsbeispiel etwa in halber Höhe an einer der Rippen 9, die hier in Querrichtung, also parallel zur Unterseite des Polsterträgers 5, verläuft.

Wegen der gleichen Ausbildung aller vier Kanäle 20 ist im folgenden nur für einen Kanal die Ausbildung der ihn begrenzenden Werkstoffpartien im einzelnen erläutert.

Wie insbesondere die Fig. 7 bis 9 erkennen lassen, sind einzelne Abschnitte des Kanals 20 nach außen hin, also gegen den Polsterkörper 6 hin, offen, während andere Abschnitte zum Inneren des Polsterträgers 5 hin, offen sind. Zur Festlegung der Metallplatte 10 im Kanal 20 braucht dieser nämlich nicht auf seiner gesamten Länge allseitig begrenzt zu sein, und aus fertigungstechnischen Gründen ist es vorteilhaft, innerhalb eines bestimmten Abschnitts den Kanal entweder nur nach außen hin oder nur nach innen hin zu begrenzen, weil dann die den Kanal begrenzenden Werkstoffpartien ohne Schwierigkeiten angeformt werden können.

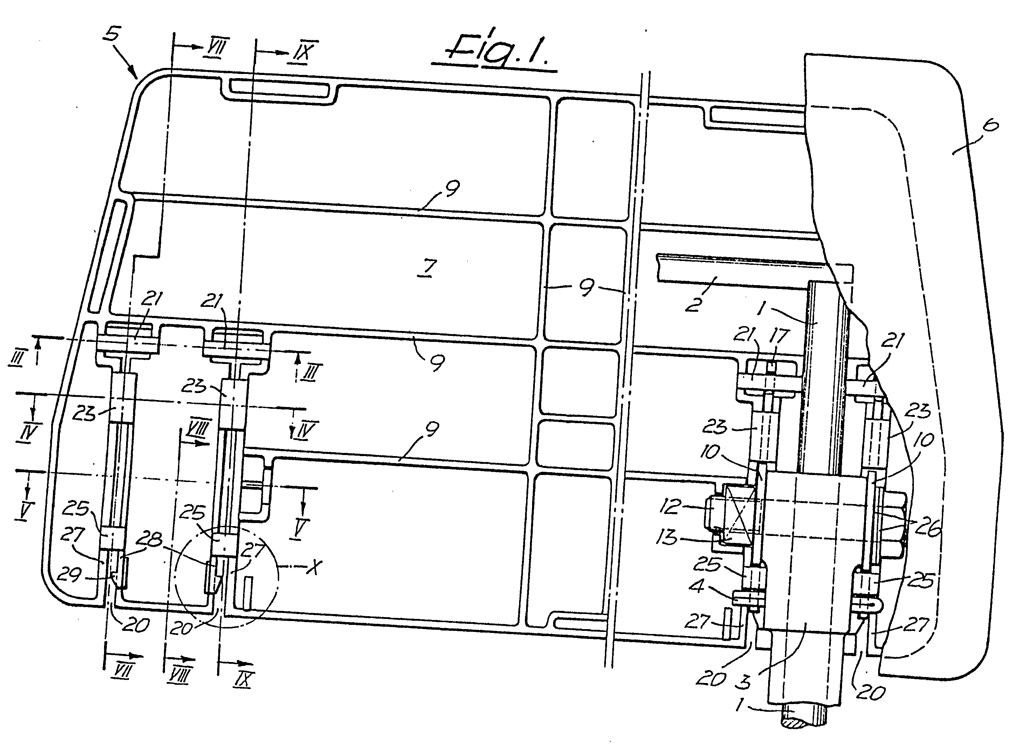

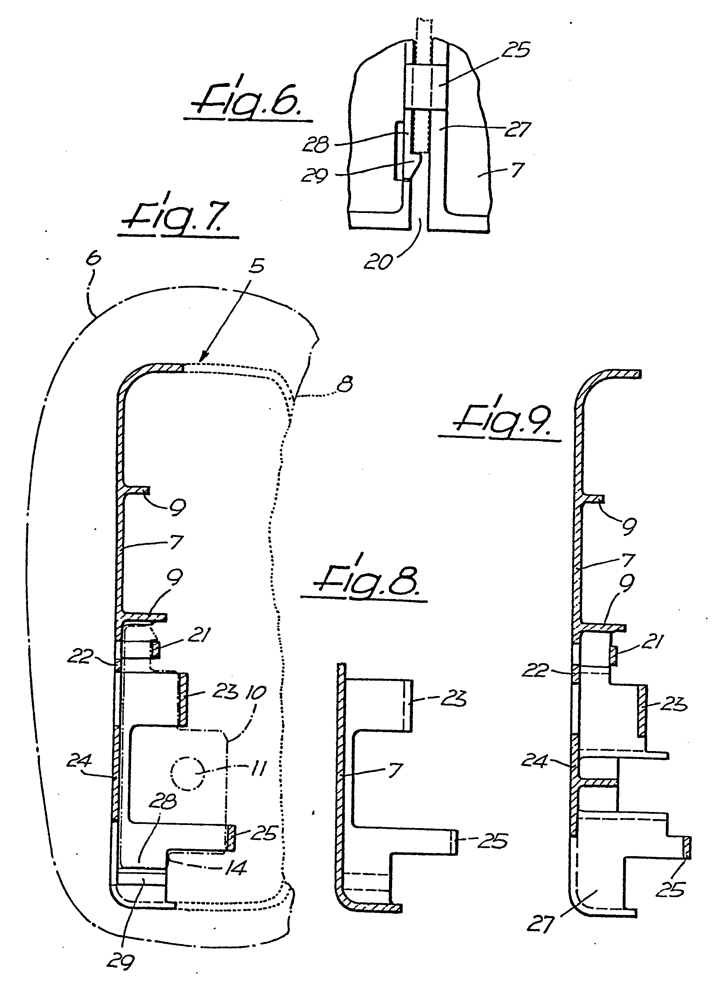

In dem an die vorstehend erwähnte Rippe 9 anschließenden, oberen Endabschnitt hat der Kanal 20 eine vergrößerte Breite, wie die Fig. 1 und 3 zeigen. Der Grund hierfür besteht darin, daß ein den Kanal 20 zum Inneren des Polsterträgers hin begrenzender, beidseitig freiliegender Steg 21 eine ausreichende Länge haben muß, damit er beim Einführen der Metallplatte 10 in den Kanal von der schrägen Flanke des Hakens 17 soweit nach innen durchgebogen werden kann, daß sich der Haken 17 unter dem Steg 21 hindurchschieben läßt. Infolge seiner Elastizität kehrt dann der Steg in seine in Fig. 3 dargestellte Ausgangslage zurück, in welcher er vom Haken 17 von oben her hintergriffen wird und dadurch die Metallplatte 10 gegen eine Verschiebung nach unten, also gegen die Unterseite des Polsterträgers 5 hin, sichert. Wie Fig. 3 zeigt, wird der Steg 21 durch den Jochabschnitt einer bügelartigen Werkstoffpartie gebildet, die an die Vorderwand 7 angeformt ist.

In den sich an diesen Endabschnitt nach unten hin anschließenden Abschnitt ist die Breite des Kanals 20 nur geringfügig größer als die Dicke der Metallplatte 10, wobei das Spiel so gewählt ist, daß sich in der Art einer schwimmenden Lagerung die Metallplatten 10 auf die Stirnflächen der Nabe des Verbindungskörpers 3 einstellen können, damit sich eine gleichmäßige und auch in unterschiedlichen Schwenklagen nicht unterschiedliche Anlage ergibt, was zur Erzielung eines geringen Streubereichs des Reibungsmomentes wichtig ist.

In den sich an den oberen Endabschnitt anschließenden, schmalen Abschnitt, ist der Kanal 20 nach innen offen und zum Polsterkörper 6 hin durch einen Steg 22 geschlossen. Danach folgt, wie die Fig. 7 und 9 zeigen, ein breiterer Abschnitt, in dem der Kanal 20 zum Polsterkörper hin offen ist und nach dem Inneren des Polsterträgers hin von einem Steg 23 begrenzt wird, welcher bei eingesetzter Metallplatte 10 auf deren ersten Stufe 15 aufliegt. Es folgt dann nach unten hin ein Abschnitt, in dem der Kanal 20 gegen das Innere des Polsterträgers 5 hin offen und nach außen hindurch einen Steg 24 geschlossen ist. Dieser Abschnitt erstreckt sich über einen großen Teil des die Bohrung 11 aufweisenden Mittelabschnitts der Metallplatte 10. Nur im unteren Teil dieses Mittelabschnitts ist der Kanal 20 wieder zum Polsterkörper hin offen und gegen das Innere des Polsterträgers 5 hin durch einen Steg 25 geschlossen, der sich bis zum Übergang zur Stufe 14 erstreckt.

Von Steg 24 aus ist der Kanal bis zur Unterseite des Polsterträgers hin sowohl nach außen als auch nach innen hin offen ist. Hier wird der Kanal auf der einen Seite durch eine feststehende Wand 27 und auf der anderen Seite durch eine sich in Kanallängsrichtung erstreckende, elastisch auslenkbare Zunge 28 begrenzt, an die ein sägezahnförmiger Haken 29 angeformt ist. Dieser Haken 29 wird, wenn die Metallplatte 10 von unten her in den Kanal 20 eingeschoben wird, nach der Seite hin dank der elastischen Auslenkbarkeit der Zunge 28 aus dem Kanal 20 herausgedrückt. Er kehrt aber wieder in den Kanal 20 zurück, sobald die Metallplatte 10 vollständig in den Kanal 20 eingeführt ist und hintergreift dann das untere Ende der Metallplatte 10 mit seiner lotrecht zur Zunge 28 verlaufenden Flanke. Daher sichert der Haken 29 zusätzlich zu dem Haken 17 die in den Kanal 20 von der Unterseite des Polsterträgers 5 her eingeführte Metallplatte 10 gegen eine Verschiebung entgegen der Einschieberichtung, während die Stege 21 bis 25 und 28 die Metallplatte in der in Fig. 7 dargestellten Position halten.

## Patentansprüche

1. Kopfstütze für Fahrzeugsitze, insbesondere Kraftfahrzeugsitze, mit wenigstens einem stabförmigen Halter (1), auf dem längsverstellbar ein aus Kunststoff bestehender Verbindungskörper (3) angeordnet ist, und mit einem aus Kunststoff bestehenden, hohlen Polsterträge (5), welcher für jeden vorhandenen Verbindungskörper ein Wangenpaar aufweist, zwischen dessen Wangen (10) der Verbindungskörper reibschlüssig auf einem den Verbindungskörper (3) und die Wangen (10) durchdringenden Lagerbolzen (12) schwenkbar gelagert ist, dadurch gekennzeichnet, daß die Wangen Metallplatten (10) sind, welche in im Inneren des Polsterträger (5) vorgesehene Aufnahmen (20) mit einem eine Einstellung erlaubenden Spiel in Achsrichtung des Lagerbolzens (12) eingesetzt und formschlüssig mit dem Polsterträger (5) verbunden sind.

2. Kopfstütze nach Anspruch 1, dadurch gekennzeichnet, daß die Aufnahmen (20) schlitzförmig sind und die sie begrenzenden Werkstoffpartien (21 bis 25, 27) einstückig mit dem Polsterträger (5) ausgebildet sind.

3. Kopfstütze nach Anspruch 1 oder 2, dadurch gekennzeichnet, daß die Aufnahmer (20) Abschnitte, welche zum Inneren des Polsterträgers (5) hin offen sind, und Abschnitte, welche nach außen hin offen sind, aufweisen.

4. Kopfstütze nach einem der Ansprüche 1 bis 3, dadurch gekennzeichnet, daß die Aufnahmen je einen sich von der Unterseite des Polsterträgers (5) gegen die Oberseite hin erstreckenden Kanal (20) bilden, in den die die Wange bildende Metallplatte (10) von der Unterseite her einschiebbar ist, und daß wenigstens eine entgegen der Einschieberichtung wirksame, formschlüssige Sperre mit mindestens einem hintergreifenden Haken (17, 29) vorgesehen ist.

5. Kopfstütze nach Anspruch 4, dadurch gekennzeichnet, daß der hintergreifende Haken (17) an der Metallplatte (10) vorgesehen ist und bei eingeschobener Merallplatte einen sich quer über den Kanal (20) hinwegerstreckenden und quer zu seiner Längsachse elastisch durchbiegbaren Steg (21) der den Kanal begrenzenden Werstoffpartien hintergreift.

6. Kopfstütze nach Anspruch 4 oder 5 dadurch gekennzeichnet, daß der hintergreifende Haken oder ein zusätzlicher hintergreifender Haken (29) an einer Zunge (28) des Polsterträgers (5) vorgesehen ist, die sich in Kanallängsrichtung erstreckt, quer zur Längsrichtung des Kanals (20) auslenkbar ist und in ihrer unausgelenkten Lage den an ihrem freien Ende angeordneten Haken (29) in den Kanal (20) ragen läßt.

7. Kopfstütze nach Anspruch 6, dadurch gekennzeichnet, daß der Haken (29) an die Zunge (28) angeformt ist und bei eingeschobener Metallplatte (20) deren gegen die Unterseite des Polsterträgers (5) weisendes Ende spielfrei hintergreift.

8. Kopfstütze nach einem der Ansprüche 1 bis 7, dadurch gekennzeichnet, daß der Verbindungskörper (3) unmittelbar an den Metallplatten (10) anliegt.

**Claims**

1. Head rest for vehicle seats, particularly motor vehicle seats, with at least one rod-shaped holder (1) on which there is a longitudinally displaceable connecting member (3) consisting of synthetic plastics material and with, consisting of synthetic plastics material, a hollow pad carrier (5) having for each available connecting member a pair of bearers between the bearers (10) of which the connecting member is frictionally pivotably mounted on a bearing arbor (12) which passes through the connecting member (3) and the bearers (10), characterised in that the bearers are metal plates (10) inserted in housings (20) provided in the interior of the pad carrier (5) with a clearance in the axial diretion of the bearing arbour (12) permitting of adjustment and which plates (10) are positively connected to the pad carrier (5).

2. Head-rest according to Claim 1, characterised in that the housing (20) have the shape of slots, the parts (21 to 25, 27) of material bounding them being constructed in one piece with the pad carrier (5).

3. Head-rest according to Claim 1 or 2, characterised in that the housing (20) comprise portions which are open towards the interior of the pad carrier (5) and portions which are open towards the outside.

4. Head-rest according to one of Claims 1 to 3, characterised in that the housings each from a channel (20) extending from the under side of the pad carrier (5) to the upper side and in which the metal plate (10) forming the bearer can be inserted from the underside and in that at least one form-locking barrier is provided which is effective against the push-in direction and which has at least one rear-engaging hook (17, 29).

5. Head-rest according to Claim 4, characterised in that the rear-engaging hook (19) is provided on the metal plate (10) and, when the metal plate is pushed in, engages behind a bridge (21) of the material which defines the channel and which extends transversely over the channel (20), which bridge(21) is flexing resiliently transversely of its longitudinal axis.

6. Head rest according to Claim 4 or 5, characterised in that the rear-engaging hook or an additional rear-engaging hook (29) is provided on a tongue (28) of the pad carrier (5) which extends in the longitudinal direction of the channel, is adapted for deflection transversely of the longitudinal direction of the channel (20) and, in its non-deflected position, allow the hook (29) located at its free end to project into the channel (20).

7. Head-rest according to Claim 6, characterised in that the hook (29) is integrally moulded on the tongue (28) and, when the metal plate (20) is pushed in, engages without clearance against the end thereof which is pointing towards the under side of the pad carrier (5).

8. Head-rest according to one of Claim 1 to 7, characterised in that the connection member (3) bears directly in the metal plate (10).

**Revendications**

1. Appui-tête pour siège de véhicule, en particulier siège de véhicule motorisé, comportant au moins un support (1) en forme de tige sur lequel est disposé, avec possibilité de culisser longitudinalement, un élément de liaison (3) en plastique, et comportant un porte-coussin creux en plastique (5) qui présente, pour chaque élément de liaison existant, une paire de joues, l'élément de liaison portant entre ses joues (10) avec possibilité de pivoter, par frottement, sur une vis (12) qui traverse l'élément de liaison (16) et les joues (10), caractérisé en ce que les joues sont des plaques métallique (10) qui sont insérées avec, dans la direction axiale de la vis (12), un jeu leur permettant de prendre leur place, dans des logements (20) prévus à l'intérieur de porte-coussin (5), et qui sont reliées par correspondance de forme au porte-coussin (5).

2. Appui-tête selon la revendication 1, caractérisé en ce que les logements (20) sont en forme de fente; et en ce que les portions de matière (21 à 25, 27) qui les limitent sont venues d'une pièce avec la porte-coussin (5).

3. Appui-tête selon la revendication 1 ou 2, caractérisé en ce que les logements (20) présentent des portions qui sont ouvertes en direction du porte-coussin (5), et des portions qui sont ouvertes vers l'extérieur.

4. Appui-tête selon l'une des revendications 1 à 3, caractérisé en ce que les logements forment chacun un canal (20) qui s'étend depuis la face inférieure du porte-coussin (5) en direction de sa face supérieure, et dans lequel on peut enfiler, depuis la face inférieure, la plaque métalllique (10) formant la joue; et en ce qu'il est prévu au moins un verrou venu de forme, agissant dans la direction opposée à la direction d'enfilage et comportant au moins un crochet (17, 29) pouvant agir par l'arrière.

5. Appui-tête selon la revendication 4, caractérisé en ce que le crochet (17) qui peut agir par l'arrière est prévu sur la plaque métallique (10) et, lorsque la plaque métallique est enfilée, vient agir par l'arrière une barrette (21) qui fait partie des portions de matière qui limitent le canal, qui s'étend transversalement le long du canal (20) et qui peut fléchir élastiquement transversalement à son axe longitudinal.

6. Appui-tête selon la revendication 4 ou 5, caractérisé en ce que le crochet qui peut agir par l'arrière, ou bien un crochet supplémentaire qui peut aussi agir par l'arrière (29), est prévu sur une languette (28) du porte-coussin (5) qui s'étend selon la direction longitudinale du canal, qui peut se déformer transversalement par rapport à la direction longitudinale du canal (20) et qui, dans sa position non déformée, laisse pénétrer dans le canal (20) le crochet (29) disposé à son extrémité libre.

7. Appui-tête selon la revendication 6, caractérisé, en ce que le crochet (29) est venu de forme sur la languette (28) et, lorsque la plaque métallique (20) est enfilée, vient saisir par l'arrière, sans jeu, l'extrémité de cette plaque dirigée vers la face inférieure du porte-coussin (5).

8. Appui-tête selon l'une des revendications 1 à 7, caractérisé en ce que l' élément de liaison (3) s'appuie directement contre les plaques métalliques (10).

Fig.1.

0 065 644

Fig.2.

17
16
15
10
11
14

Fig.3.

21    17    21

7    10

Fig.4.

20    20    7

23    23

Fig.5.

7

20    20

3

0 065 644

Fig.6.

Fig.7.

Fig.9.

Fig.8.